# EUROPÄISCHE PATENTANMELDUNG

(11) **EP 0 989 513 A2**
(43) Veröffentlichungstag der Anmeldung: **29.03.2000**
(21) Anmeldenummer: 99112593.1
(22) Anmeldetag: 01.07.1999
(51) Int. Cl.: G06K 19/077

(54) **Verfahren zur Herstellung einer kontaktlosen Chipkarte**

(30) Priorität: 22.09.1998 DE 19843425
(71) Anmelder: Kunz GmbH, 1220 Wien (AT)
(72) Erfinder: Dorner, Frank, 1220 Wien (AT)
(74) Vertreter: Haft, von Puttkamer, Berngruber, Czybulka

(57) **Zusammenfassung**

Zur Herstellung einer kontaktlosen Chipkarte wird ein Schichtaufbau aus einer Innenschicht (2) mit einer Ausnehmung (4) zur Aufnahme des Chipmoduls (8) und einer Antennenspule (6) und einer Deckschicht (1, 13) auf beiden Seiten der Innenschicht (2) unter Druck und Wärme laminiert. Um die Bildung von Einsenkungen und damit Fehlern beim Bedrucken der Deckschichten (1, 13) zu verhindern, wird in die Ausnehmung (4) eine aufschäumbare Kunststoffmasse (12) eingebracht, die beim Laminieren aufgeschäumt wird.

## Beschreibung

Die Erfindung bezieht sich auf ein Verfahren zur Herstellung einer kontaktlosen Chipkarte durch Laminieren eines Schichtaufbaus unter Druck und Wärme, der eine Innenschicht mit einer Ausnehmung zur Aufnahme wenigstens eines Chipmoduls und wenigstens einer Antennenspule und eine Deckschicht auf beiden Seiten der Innenschicht aufweist.

Um eine möglichst glatte, ebene Oberfläche zu erhalten, wird bei einer derartigen Chipkarte die Ausnehmung in der Innenschicht möglichst genau den Abmessungen des Chipmoduls und der Antennenspule angepaßt. Dazu besteht die Innenschicht im allgemeinen aus zwei Einzelschichten. Die eine Einzelschicht, in die die ringförmige Ausnehmung für die Antennenspule gestanzt ist, weist eine der Antennenspule entsprechende Dicke auf. Von einer weiteren Ausstanzung gegebenenfalls in einer weiteren Einzelschicht wird der restliche Teil des Chipmoduls aufgenommen, das fallweise eine größere Dicke als die Antennenspule aufweisen kann (vergleiche z.B. DE 196 46 184 A1).

Nach dem bekannten Chipkarten-Herstellungsverfahren müssen also Einzelschichten genau ausgestanzt, gegenüber einander positioniert und z.B. thermisch miteinander verbunden werden, bevor das Chipmodul und die Spule in die Aussparung eingesetzt werden können.

Durch Toleranzen der Spule und des Chipmoduls entsteht zwischen der Aussparungsöffnung an der Oberfläche der Innenschicht und der Spule bzw. dem Chipmodul unvermeidlich ein mehr oder weniger breiter Spalt.

Damit die Karte eine möglichst geringe Dicke aufweist, wird meist ein Chipmodul verwendet, bei dem auf einem dünnen Plättchen als Chipträger ein IC-Baustein angebondet ist. Das Chipmodul weist damit einen unregelmäßigen Dickenquerschnitt auf, wodurch weitere Freiräume entstehen. Dadurch bilden sich Einsenkungen an der Oberfläche der laminierten Karte, die beim Bedrucken der Karte, d.h. bei Verfahren, die eine glatte, ebene Oberfläche voraussetzen, beispielsweise mit einem Thermodruckkopf zu entsprechenden Bedruckungsfehlern, nämlich unbedruckten Stellen führen.

Um das Delaminieren der Karte zu verhindern und in die Ausnehmung sowohl groß- wie kleinvolumige Antennenwicklungen einsetzen zu können, ist es aus DE 197 10 656 A1 bekannt, eine Kernschicht mit einer Ausnehmung für die Antennenspule und ein Chipmodul auf einer Zwischenfolie zu fixieren, worauf der verbleibende Freiraum mit einer flüssigen Kunststoffmasse aufgefüllt wird und dann die Antennenspule und das Chipmodul eingelegt werden. Damit eine zuverlässige Verbindung der einzelnen Komponenten erreicht wird, wird auf die Kernschicht eine eingeschnittene Zwischenfolie aufgelegt, durch die darunterliegende Luftblasen entweichen können. Da die flüssige Kunststoffmasse beim Aushärten schrumpft, wird auch bei diesem Verfahren an der Kartenoberfläche eine Einsenkung gebildet.

Aufgabe der Erfindung ist es, ein Verfahren bereitzustellen, mit dem auf einfache Weise Chipkarten mit einer einwandfrei ebenen und damit fehlerfrei bedruckbaren Oberfläche erhalten werden.

Dies wird erfindungsgemäß mit dem im Anspruch 1 gekennzeichneten Verfahren erreicht. In den Unteransprüchen sind vorteilhafte Ausgestaltungen der Erfindung wiedergegeben.

Nach dem erfindungsgemäßen Verfahren wird in die Ausnehmung in der Innenschicht eine Kunststoffmasse eingebracht, die beim Laminieren aufschäumt. Damit wird der nach dem Einbringen des Chipmoduls und/oder der Antennenspule verbleibende Freiraum der Ausnehmung zwischen den beiden Deckschichten mit einem Kunststoffschaum aufgefüllt und dadurch die Bildung von Einsenkungen in der Oberfläche der Karte verhindert.

Nach dem erfindungsgemäßen Verfahren wird damit eine einwandfreie glatte Kartenoberfläche erhalten, die insbesondere mit mit Thermodruckköpfen arbeitenden Druckverfahren fehlerfrei bedruckbar ist.

Die erfindungsgemäß hergestellte Karte kann also z.B. mit einem Thermodruckkopf und einem Thermotransferband z.B. nach EP 153 693 mit einer thermoreaktiven oder sublimierbaren Farbschicht oder beispielsweise durch Off-Set-Druck ohne Bildung fehlerhaft bedruckter Stellen bedruckt werden. Dadurch ist eine einwandfreie Bedruckung, beispielsweise bei der Personalisierung der Karte mit dem Namen oder sonstigen Daten oder dem Foto des Karteninhabers, dem Wert, der Gültigkeitsdauer oder sonstigen alphanumerischen Daten einer Identifikations- oder Berechtigungskarte gewährleistet.

Die Innenschicht und die Deckschichten können aus irgendeinem laminierbaren thermoplastischen Kunststoff bestehen, z.B. PVC (Polyvinylchlorid), PET (Polyethylenterephthalat), PBT (Polybutylenterephthalat), ABS (Acrylonitril-Butadien-Styrol), PC (Polycarbonat), Polyethylen, Polypropylen, Polyamid oder PMMA (Polymethmethacrylat). Die Innen- und Deckschichten können aus den gleichen oder unterschiedlichen Kunststoffen bestehen.

Die aufschäumbare Kunststoffmasse weist eine Aufschäumtemperatur auf, die im Bereich der Laminiertemperatur oder darunter liegt, also im Bereich oder unterhalb der Erweichungstemperatur des Kunststoffs der Innen- und Deckschicht.

Die aufschäumbare Kunststoffmasse kann beispielsweise ein Gemisch aus einem Schäummittel und einem Prepolymeren bestehen, das nach dem Aufschäumen aushärtet, oder aus einem Prepolymeren mit Gruppen, aus denen beim Auspolymerisieren ein Gas, wie Kohlendioxid, zur Schaumbildung abgespalten wird, beispielsweise Polyurethan.

Nach dem erfindungsgemäßen Verfahren braucht die Ausstanzung in der Innenschicht nicht genau den Abmessungen des Chipmoduls und der Antennenspule angepaßt zu sein. Damit wird die Herstellung der Innenschicht wesentlich vereinfacht. Insbesondere kann erfindungsgemäß die Innenschicht aus einer einzigen Schicht bestehen, die eine der Höhe des Chipmoduls entsprechende Dicke aufweist. Damit entfällt das nach dem Stand der Technik notwendige Herstellen zweier genau ausgestanzter Einzelschichten sowie genaues Positionieren und Verschweißen der Einzelschichten.

Auch können beide oder eine der beiden Deckschichten aus mehreren Einzelschichten aufgebaut sein, die gleichfalls beim Laminieren miteinander verbunden werden können. Auch können mehrere Chipmodule und/oder Antennen in einer oder mehreren Ausnehmungen der Innenschicht vorgesehen sein.

Zum Einbringen der aufschäumbaren Kunststoffmasse in die beispielsweise durch eine Ausstanzung gebildete Ausnehmung der Innenschicht wird die Innenschicht vorzugsweise auf einer Deckschicht angeordnet und mit dieser beispielsweise durch Punktverschweißung verbunden. Daraufhin wird die Antennenspule zusammen mit dem daran angebondeten Chipmodul in die Ausnehmung gelegt und durch die aufschäumbare Kunststoffmasse zugleich fixiert. Alsdann wird die obere Öffnung der Ausnehmung mit der zweiten Deckschicht verschlossen, worauf die Schichtanordnung laminiert wird.

Auch ist es möglich, die ausgestanzte Innenschicht auf der einen Deckschicht anzuordnen und mit dieser zu verbinden, dann das Chipmodul mit der Antennenspule in die Ausnehmung zu legen und anschließend auf der oberen Seite der Innenschicht z.B. mit einer Siebdruckvorrichtung eine Schicht aus der schäumbaren Kunststoffmasse aufzubringen, auf die dann die zweite Deckschicht gelegt wird.

Der so erhaltene Schichtaufbau kann zum Laminieren der Schichten und Aufschäumen des aufschäumbaren Kunststoffs in der Ausnehmung der Innenschicht in eine herkömmliche Laminierpresse mit heizbaren Preßplatten oder Walzen gegeben werden. Die Laminiertemperatur hängt von der Erweichungstemperatur des Kunststoffs der einzelnen Schichten des Schichtaufbaus sowie von der Schäumtemperatur der schäumbaren Masse ab. Sie kann beispielsweise 130 bis 190°C betragen. Um eine möglichst glatte Oberfläche zu erhalten, kann der Laminierdruck beim Abkühlen erhöht werden. Auch ist es möglich, die Karte nach dem Heißlaminieren in einer Kaltpresse unter erhöhtem Druck zu verpressen. Der so erhaltene Kartenrohling kann dann z.B. durch Ausstanzen auf das Endformat der Karte gebracht werden. Die Karte kann dann zum Personalisieren bedruckt und die Bedruckung gegebenenfalls mit einer transparenten Schutzschicht versehen werden.

Nachstehend ist das erfindungsgemäße Verfahren anhand der Zeichnung näher erläutert. Darin zeigen
- Figur 1: eine perspektivische Ansicht der Innenschicht mit Chipmodul und Antennenspule auf der unteren Deckschicht vor dem Aufbringen der oberen Deckschicht;
- Figur 2: einen Querschnitt durch einen Teil der Karte entlang der Linie II-II in Figur 1 mit aufgebrachter oberer Deckschicht in vergrößerter Wiedergabe;
- Figur 3: die Karte gemäß Figur 2 nach dem Aufschäumen der Kunststoffmasse; und
- Figuren 4 und 5: einen den Figuren 2 und 3 entsprechenden Querschnitt einer anderen Ausführungsform.

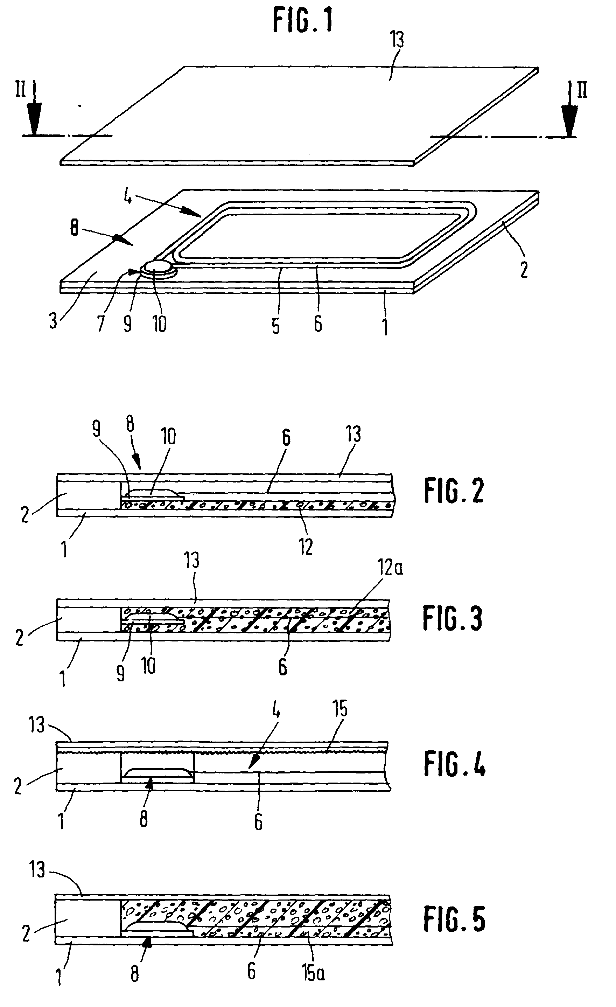

Zur Herstellung einer Identifikations-, Kredit- oder dergleichen Berechtigungskarte ist auf einer unteren Deckschicht 1 beispielsweise durch Punktschweißen eine Innenschicht 2 befestigt. Die Innenschicht 2 weist eine ausgestanzte, also zur Oberfläche 3 offene Ausnehmung 4 auf, die gemäß Figur 1 aus einem ringförmigen Kanal 5 zur Aufnahme einer Antennenspule 6 und einer Erweiterung 7 des Kanals 5 zur Aufnahme eines Chipmoduls 8 besteht, das auf einem Trägerplättchen 9 einen an die Antennenspule 6 angebondeten IC-Baustein 10 aufweist.

Gemäß Figur 2 liegt das Chipmodul 8 mit der Antennenspule 6 auf einer aufschäumbaren Kunststoffmasse 12, die in die Ausnehmung 4 vor dem Einlegen des Moduls 8 mit der Spule 6 eingebracht worden ist.

Auf die Oberfläche 3 der Innenschicht 2 wird die zweite Deckschicht 13 gelegt, um die Ausnehmung 4 zu verschließen. Die Dicke der Innenschicht 2 kann beispielsweise 1 mm oder weniger betragen, die Dicke der Deckschichten 1 und 13 z.B. 100 µm oder weniger.

Der in Figur 2 dargestellte Schichtaufbau wird zum Laminieren zwischen den beiden nicht dargestellten Preßplatten einer Laminierpresse angeordnet. Beim Laminieren wird die Kunststoffmasse 12 aufgeschäumt und damit die Ausnehmung 4 mit Kunststoffschaumstoff 12a aufgefüllt (Figur 3).

Bei der Variante nach Figuren 4 und 5 wird das Chipmodul 8 mit der Antennenspule 6 in die Ausnehmung 4 der Innenschicht 2 gelegt, an der an der Unterseite die untere Deckschicht 1 befestigt ist. Alsdann wird z.B. mit einer Siebdruckeinrichtung auf die Oberfläche 3 der Innenschicht 2 einschließlich der Ausnehmung 4 eine Schicht 15 aus aufschäumbarer Kunststoffmasse gegeben, worauf auf die mit der Schicht 15 versehene Innenschicht 2 die zweite Deckschicht 13 gelegt wird. Beim Laminieren wird die Kunststoffmasse 15 im Bereich der Ausnehmung 4 ausgeschäumt und damit die Ausnehmung 4 mit Kunststoffschaumstoff 15a aufgefüllt, während durch den Druck der Laminierpresse ein Aufschäumen der Schicht 15 zwischen der Innenschicht 2 und der oberen Deckschicht 13 im Bereich außerhalb der Ausnehmung 4 verhindert ist.

## Patentansprüche

1. Verfahren zur Herstellung einer kontaktlosen Chipkarte durch Laminieren eines Schichtaufbaus, der eine Innenschicht mit einer Ausnehmung zur Aufnahme wenigstens eines Chipmoduls und/oder wenigstens einer Antennenspule und eine Deckschicht auf beiden Seiten der Innenschicht aufweist, unter Druck und Wärme, dadurch gekennzeichnet, dass in die Ausnehmung (4) eine aufschäumbare Kunststoffmasse (12, 15) eingebracht wird, die beim Laminieren aufschäumt.

2. Verfahren nach Anspruch 1, dadurch gekennzeichnet, dass die Innenschicht (2) auf einer Deckschicht (1) angeordnet wird, bevor die aufschäumbare Kunststoffmasse (12, 15) in die Ausnehmung (4) eingebracht wird.

3. Verfahren nach Anspruch 2, dadurch gekennzeichnet, dass die Innenschicht (2) vor dem Einbringen der aufschäumbaren Kunststoffmasse (12, 15) in die Ausnehmung (4) mit der einen Deckschicht (1) verbunden wird.

4. Verfahren nach Anspruch 2 oder 3, dadurch gekennzeichnet, dass das Chipmodul (8) und/oder die Antennenspule (6) auf die aufschäumbare Kunststoffmasse (12) in der Ausnehmung (4) gelegt werden.

5. Verfahren nach einem der Ansprüche 1 bis 3, dadurch gekennzeichnet, dass die aufschäumbare Kunststoffmasse als Schicht (15) auf wenigstens eine Seite der Innenschicht (2) aufgebracht wird.

6. Verfahren nach Anspruch 1, dadurch gekennzeichnet, dass die Innenschicht (2) aus einer einzigen Schicht besteht.

7. Verfahren nach einem der vorstehenden Ansprüche, dadurch gekennzeichnet, dass wenigstens eine der Deckschichten (1, 13) nach dem Laminieren bedruckt wird.
